Europäisches Patentamt

European Patent Office

Office européen des brevets

(19)

(11) Publication number: **0 071 675**
**A1**

# EUROPEAN PATENT APPLICATION

(12)

(21) Application number: **81303551.6**

(22) Date of filing: **04.08.81**

(51) Int. Cl.³: **C 01 B 31/08**

(43) Date of publication of application: **16.02.83**
**Bulletin 83/7**

(84) Designated Contracting States: **AT BE CH DE FR GB IT LI LU NL SE**

(71) Applicant: **HERBERT BEVEN & COMPANY LIMITED, Boxford Court, Boxford, Colchester Essex, CO6 5HR (GB)**

(72) Inventor: **Matsui, Kotaro, No. 2325-3 Mishinden, Obari, Komaki City Aichi Prefecture (JP)**

(74) Representative: **Kosmin, Gerald Emmanuel et al, HASELTINE, LAKE & CO. Hazlitt House 28 Southampton Buildings Chancery Lane, London, WC2A 1AT (GB)**

(54) **Apparatus for regenerating activated carbon.**

(57) The rapid regeneration of used activated carbon particles employed in the purification of gases or liquids, particularly water, is effected by means of a relatively inexpensive apparatus in which the carbon particles (1) are allowed to fall under gravity through a pathway formed by an electrode assembly comprising two vertically extending series of horizontally disposed plate electrodes (5) und (6) which are offset so that the members of one series are interjacent those of the other series and may overlap, whilst one of the series of electrodes (5) is rotated about the vertical axis of a closed vessel (9) housing the electrode assembly. As the carbon particles fall down the pathway a high voltage electric current is fed to the electrodes so as to cause spark discharges to occur between the carbon particles as they travel through the gaps between the electrodes, resulting in the instantaneous generation of high temperatures which cause the adsorbed substances in the carbon particles to be desorbed without consequential damage to the activated carbon structure. The hot reactivated carbon particles can be cooled in a cooling tank (17) containing water (18).

1

"APPARATUS FOR REGENERATING
ACTIVATED CARBON"

This invention relates to the regeneration of used activated carbon particles.

The purification of waste gases and liquids discharged from factories and other manufacturing facilities has been an important problem for a long time and has recently become an even more serious problem, as a result of increased pollution of the environment. Many methods of treating waste gases and liquids have been proposed and among these the use of activated carbon has been widely adopted.

Activated carbon is an advantageous reagent because of its strong adsorptive power, but in order to be reused, it must be regenerated after it has become inactive as a result of it becoming saturated with adsorbed matter. In a conventional method of regenerating used activated carbon, it is heated, for instance in an oil-fired rotary kiln, at a temperature of $800^{\circ}C$ or higher in a controlled atmosphere in order to burn off the adsorbed matter and water vapour is introduced concurrently to reactivate the carbon by means of a water gas reaction. However, this regeneration method requires heating for a long time at said high temperature, so that it requires a considerable amount of fuel, as well as expensive installation costs. Furthermore, the reactivation of the carbon involves a loss of the active carbon so that there is a practical limit beyond which the regeneration process becomes uneconomical.

In one commercial regeneration process, use is made of Joule's heat generated by conducting a continuous electric current through the used activated carbon, in order to heat the carbon and desorb the adsorbed material, but this method also necessitates expensive installation costs, especially for the electrical equipment, as it requires very heavy current.

It has been proposed, in Japanese Patent Application Publication No. 6393/77, to modify the foregoing process by applying a vibratory movement to a cylindrical vessel containing used activated carbon particles while conducting the electric current therethrough, by means of vertically disposed parallel electrode rods positioned within the vessel, so as to generate spark discharges between particles of the active carbon and thereby liberate the adsorbed material. However, it was found that this modified process still has the disadvantage that with carbon particles which contact each other for a relatively long time, electric current is unnecessarily consumed in the local generation of Joule's heat, and this causes a lowering of efficiency and difficulties in controlling temperature during the operation, so that it becomes difficult to recover the desorbed material, even if it is useful, since it decomposes at the high temperatures caused by the Joule's heat.

A modification of the foregoing proposal has been described in Japanese Patent Application Publication No. 42194/78 in which a number of fixed vertical electrodes are arranged parallel to each other in a slightly inclined vibratable tank so that each adjacent pair of electrodes forms a container from which carbon particles can flow to the adjacent container in cascade fashion when the tank is vibrated whilst they are subjected to an electric current. However in practice this arrangement has not been found to work satisfactorily, because of the difficulty in ascertaining the correct amount of inclination to be given to the vibrating tank, since if the angle is too steep insufficient regeneration of the carbon particles occurs and if the angle is too slight, the particles tend to flow in the reverse direction.

A further modification of the foregoing proposal is described in Japanese Patent Application Publication No. 6892/79 in which a vibratable horizontal tank contains two spaced interdigitated series of vertically disposed plate electrodes which form a meandering horizontal path for the used activated carbon particles which are introduced into the electrode assembly at one end of the said path and caused to flow to the other end by the vibration of the tank whilst subjecting the particles to an electric arc discharge. However this arrangement has not in practice been found to give a sufficient regeneration efficiency to warrant commercial exploitation.

It is an object of the present invention to provide an apparatus for effecting the regeneration of used activated carbon particles which will avoid the disadvantages of the previously known and proposed apparatus and which will provide a relatively simple and inexpensive means to enable activated carbon to be extensively employed in the purification of liquids, especially water.

It has surprisingly now been found, in accordance with the invention, that if instead of subjecting a vibrating mass of used activated carbon particles flowing in a substantially horizontal direction to electric spark discharges obtained from a fixed electrode assembly, the carbon particles are allowed to fall under gravity through an electrode assembly comprising two series of horizontally disposed plate electrodes with one series of electrodes being offset and being moved with respect to the other series whilst subjecting the falling particles to electric spark discharges, effective rapid regeneration of the activated carbon particles can be achieved without the disadvantages found with the various previously disclosed apparatus.

Thus according to the invention, there is provided an apparatus for regenerating used activated carbon particles, which comprises a vessel having a vertically extending wall and having an inlet for used activated carbon particles in its upper end portion and an outlet for regenerated activated carbon particles in its lower end portion, said vessel having disposed therein a first vertical series of substantially horizontal fixed plate electrodes and a second vertical series of substantially horizontal plate electrodes capable of movement with respect to the said first series of electrodes, the first series being offset with respect to the second series so as to form a pathway through which the carbon particles can fall under gravity when the apparatus is in use, regulatable means for feeding used activated carbon particles to said inlet, means for moving said second series of electrodes with respect to the said first series, and means for causing a high voltage current to flow between said first and second series of electrodes.

The two series of plate electrodes housed within the vessel are offset with respect to each other, so that the members of one series will be interjacent those of the other series. There may be some degree of overlap between the electrodes of one series and those of the other series, depending on the length of the pathway between the electrode plates which the descending carbon particles are required to travel.

In a preferred embodiment of the invention, the first series of electrodes is mounted on the interior of the wall of the vessel whilst the second series is substantially symmetrically disposed with respect to the vertical axis of the vessel. The wall of the vessel will generally have a rectangular or circular cross-section, in which case the electrodes of the first series are normally of annular shape whilst the electrodes of the second series are of circular shape. Preferably the electrodes of the second series are adapted for rotary movement about the vertical axis of the vessel. In addition they may be capable of some vertical movement whereby the gaps between the electrodes can be varied.

The pressure within the electrode-containing vessel may advantageously be reduced, for example by means of a suction fan.

Advantageously the treated carbon particles withdrawn from the outlet of the vessel are fed to a cooling tank, generally a water tank, in which the regenerated carbon particles can be cooled down before being withdrawn from the apparatus.

The means for feeding a high voltage current to the electrodes can be any suitable source of high voltage AC or DC electricity, for example a system similar to that used for motor car sparking plugs.

The apparatus of the invention may be used to regenerate used activated carbon particles of any type, for example powdered, granular or pelleted activated carbon, which has been used to treat or purify liquids or gases. It is of particular use in the rapid regeneration of activated carbon employed in the purification of water, especially water for human or animal consumption, i.e. potable water.

For a better understanding of the invention and to show how the same may be carried into effect, one embodiment of an apparatus in accordance with the invention will now be described, by way of example, with reference to the accompanying drawing, in which:

Figure 1 is a part-sectional front elevation of an apparatus for regenerating used activated carbon particles; and

Figure 2 is a sectional view on an enlarged scale of part of the apparatus shown in Figure 1.

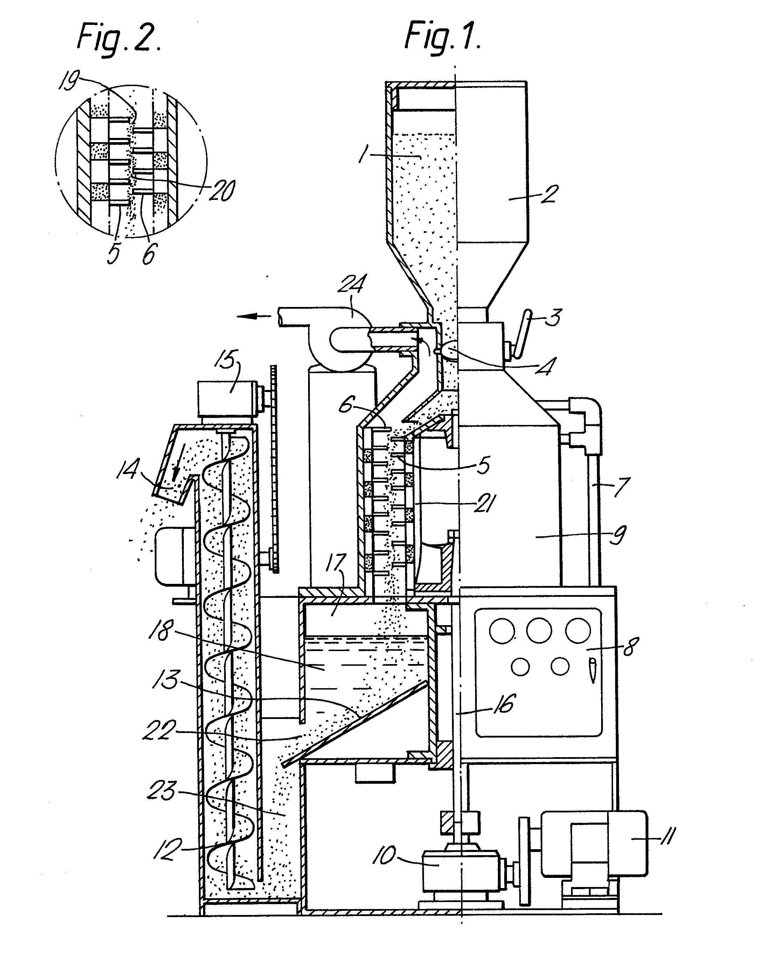

Referring to the drawing, used activated carbon particles 1 are gravity fed from a hopper 2 into an electrode-containing closed vessel 9 through a valve 4, the flow through which can be adjusted by manipulation of a lever 3. Within the vessel 9 there is a rotatable cylinder 21 having a series of annular plate electrodes 5 affixed to the outside of the cylinder 21. A similar series of plate electrodes 6 are affixed to the inside surface of the wall of the vessel 9. The two series of electrodes are offset as can be seen more clearly from Figure 2 of the drawing. Each individual electrode is firmly affixed in position with electrical insulators. The annular electrodes 5 are connected to an electric distributor panel 8 through a wire conduit 7. The cylinder 21 is connected by a shaft 16 to a coupling 10 which can be rotated by a motor 11. The speed of rotation of the cylinder is adjustable in dependence upon the volume, shape and quantity of the carbon particles being treated. A cam (not shown) is incorporated in the drive to the cylinder 21 so as to cause the cylinder 21 to move up and down slightly as it rotates. This causes the gaps 19 and 20 (see Figure 2) between the electrodes 5 and 6 to vary slightly which in turn increases the number of electric sparks generated as the carbon particles 1 pass through the gaps between the electrodes. The sparks are generated as the carbon particles touch each other or are separated from each other and result in high temperatures being generated which gasify or carbonise the substances adsorbed by the activated carbon particles without causing damage to the carbon particles.

After regeneration in the vessel 9, the carbon particles passing through an outlet in the bottom of the vessel 9 are allowed to fall into a cooling tank 17 containing water 18 which can be maintained at a high level because the tank 17 is depressurised by the suction fan 24 which also serves to depressurise the vessel 9. The cooled carbon particles fall on to a sloping panel 13 and slide out of the tank 17 through an outlet 22 and into a further adjoining tank 23, where they accumulate and are then transported by a screw lift conveyor 12 driven by a motor 15 to an outlet 14. Dewatering of the treated carbon particles occurs as they are travelling up the conveyor 12.

The high voltage which is applied to the annular electrodes 5 from the distributor panel 8 via the wire conduit 7 can be derived from DC or AC electricity which can be transformed from low voltage current in order to avoid the danger of electrical shocks to personnel working the apparatus. A system similar to that employed for internal combustion motor sparking plugs has been found to be suitable for use in the apparatus of the invention.

If desired, the feed hopper 1 may be provided with a heater to regulate the moisture content and the temperature of the used carbon particles to be regenerated.

CLAIMS:

1.  Apparatus for regenerating used activated carbon particles, which comprises a vessel having a vertically extending wall and having an inlet for used activated carbon particles in its upper end portion and an outlet for regenerated activated carbon particles in its lower end portion, said vessel having disposed therein a first vertical series of substantially horizontal fixed plate electrodes and a second vertical series of substantially horizontal plate electrodes capable of movement with respect to the said first series of electrodes, the first series being offset with respect to the second series so as to form a pathway through which the carbon particles can fall under gravity when the apparatus is in use, regulatable means for feeding used activated carbon particles to said inlet, means for moving said second series of electrodes with respect to the said first series, and means for causing a high voltage current to flow between said first and second series of electrodes.

2.  An apparatus as claimed in Claim 1, wherein said first series of electrodes is mounted on the interior of the wall of said vessel and said second series of electrodes is substantially symmetrically disposed with respect to the axis of the vessel.

3.  An apparatus as claimed in Claim 2, wherein said first series of electrodes is composed of annular electrodes and said second series of electrodes is composed of circular electrodes.

4.  An apparatus as claimed in Claim 1, 2 or 3, wherein said second series of electrodes is capable of rotary movement about the vertical axis of the vessel.

5.  An apparatus as claimed in Claim 1 and further comprising a cooling tank which is in communication with said vessel outlet.

6. An apparatus as claimed in Claim 5, wherein said cooling tank is a water tank.

7. An apparatus as claimed in Claim 1 and further comprising means for reducing the pressure within said vessel.

Fig.2.

Fig.1.

0071675

1/1

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| Y | PATENT ABSTRACTS OF JAPAN, vol. 4, no. 77, June 4, 1980, page 68C13<br><br>& JP - A - 5 542 257 (KYORITSU YUKI KOGYO KENKYUSHO K.K.) (25-03-1980)<br><br>* Whole abstract and figure * | 1 | C 01 B 31/08 |
| Y | PATENT ABSTRACTS OF JAPAN, vol. 1, no. 54, May 25, 1977, page 366C77<br><br>& JP - A - 5 212 695 (MIHARA KANKYO GIJUTSU K.K.) (31-01-77)<br><br>* Whole abstract and figure * | 1 | **TECHNICAL FIELDS SEARCHED (Int.Cl. 3)**<br><br>C 01 B 31/08 |
| A | CHEMICAL ABSTRACTS, vol. 85, no. 10, 6 September 1976, page 332, right-hand column, abstract no. 67850a Columbus Ohio (US)<br><br>& JP - A - 7 633 797 (O. MIHARA et al.) (23-03-76) | | |
| DA | DERWENT JAPANESE PATENTS REPORT, week B09, published on April 11, 1979, Section J, page 3, abstract JP 54006892<br><br>& JP - A - 5 468 892 (M. SORIMA- CHI) (19-01-79) | | **CATEGORY OF CITED DOCUMENTS**<br><br>X: particularly relevant if taken alone<br>Y: particularly relevant if combined with another document of the same category<br>A: technological background<br>O: non-written disclosure<br>P: intermediate document |
| DA | DERWENT JAPANESE PATENTS REPORT, week A22, published on July 10, 1978, Section J, page 4, abstract JP 53042194 London (GB)              ./. | | T: theory or principle underlying the invention<br>E: earlier patent document, but published on, or after the filing date<br>D: document cited in the application<br>L: document cited for other reasons<br><br>&: member of the same patent family, corresponding document |

The present search report has been drawn up for all claims

| Place of search | Date of completion of the search | Examiner |
|---|---|---|
| The Hague | 14-04-1982 | BREBION |

EPO Form 1503.1 06.78

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | & JP - A - 5 342 194 (CHUBU K.K.) (17-04-78)<br><br>-- -- | | |
| DA | DERWENT JAPANESE PATENTS REPORT, week Y9, published on April 11, 1977, section J, page 4, abstract JP 52006393 London (GB) | · | |
| | & JP - A - 52 006 393 (MIHARA KANKYO GIJUT) (18-01-77)<br><br>-- -- -- -- | | |

TECHNICAL FIELDS SEARCHED (Int. Cl.³)